# EUROPEAN PATENT APPLICATION

(11) **EP 2 639 002 A1**
(43) Date of publication of application: **18.09.2013**
(21) Application number: 11839519.3
(22) Date of filing: 10.08.2011
(51) Int. Cl.: B23H 3/00, B23H 3/02, B23H 7/16

(54) **ELECTROCHEMICAL MACHINING METHOD AND POWER SOURCE FOR CARRYING OUT SAID METHOD**

(30) Priority: 13.11.2010 RU 2010146353; 12.01.2011 RU 2011101119
(71) Applicant: OBSHCHESTVO S OGRANICHENNOY OTVETSTVENNOST'YU "ECM", Ufa 450027 (RU)
(72) Inventor: ZAITSEV, Vyacheslav Aleksandrovich, Ufa 450015 (RU); IDRISOV, Timur Rashitovich, Ufa 450005 (RU); SMIRNOV, Maksim Sergeevich, Ufa 450043 (RU); BEZRUKOV, Sergej Viktorovich, Ufa 450092 (RU)
(74) Representative: Grünecker, Kinkeldey, Stockmair & Schwanhäusser
(86) International application number: PCT/RU2011/000604
(87) International publication number: WO 2012/064219

(57) **Abstract**

The invention relates to electrochemical machining of current-conducting materials and can be used in the production of punches, pressing molds and other complex-shaped components at the finishing stage. The method comprises supplying square microsecond current pulses synchronized with the moment of maximum convergence of an electrode instrument and an electrode blank for machining within the following parameter range: pulse length t = 10...500 µs, length of the leading and trailing pulse edges τ_{f}= 0,5...5,0 µs, voltage amplitude Uₐ =10-100 V, amplitude density of the current j = 100...10000 A/cm². The process is carried out with the amplitude and pulse length being adjusted in such a manner that the trailing edge of each pulse corresponds to the moment of the greatest electro-conductivity across an inter-electrode gap. The power source is in the form of current generators connected in parallel, in which each generator is connected to a load via a current switch so as to short out the current generator when the current of the generator is not yet at the specified value or when there needs to be a pause between the pulses and switching of the current to pick up and carry the load, in order to form a pulse of the specified length on the load. The normally closed contact of the current switch is connected to a common point while the normally opened contact is connected to the current generator via a diode. The invention makes it possible to increase the efficiency of the electrochemical machining of current-conducting materials and to provide a high-quality surface by optimizing the current pulse parameters and the use of a reliable power source with a common control system.

## Description

The invention relates to electrochemical machining of current-conducting materials and can be used in production of punches, pressing moulds, and other complex-shaped components at the finishing stage.

Such machining can be effectively performed using pulse power sources with microsecond pulse length.

An electrochemical dimensional machining method is known (Russian Federation Patent 2038928, IPC B23H3/02, published on 10.07.1995), wherein, when using a pulse power source with a decreasing current-voltage characteristic, the machining is carried out by vibrating one of the electrodes and by supplying voltage pulses during the electrode convergence phase, and the current value of voltage pulses is controlled by selecting voltage surges in the electrode convergence and retraction areas; the pulse supply is controlled with respect to the moment of maximum convergence of the electrodes by inhibiting pulse supply if a voltage surge is present in the electrode convergence area, and the pulse voltage is supplied in advance if a voltage surge is present in the electrode retraction area, wherein the electrode instrument supply speed is increased until the formation of a third local extremum of the voltage maximum in the middle part of the pulse, and said speed is maintained so that the voltage surge does not exceed the voltage value in the middle part of the pulse by more than 20 percent.

In the above method, millisecond pulses are used when over the course of the action thereof, the inter-electrode gap becomes filled with products of anodic dissolution: sludge and gas-vapor mixture. Thus, when the temperature increases and a small inter-electrode gap is utilized, the process stability is compromised, and therefore the above method does not provide an increase in machining efficiency, quality, and precision in shaping of the machined surface, especially when machining hot-strength, heat-resistant, hard, and titanium alloys.

An electrochemical machining method is known (USSR Inventor's Certificate 891299, IPC⁵ B23P1/04, published on 23.12.1981), wherein the anodic dissolution process is carried out using square current pulses in microsecond range. The current pulse length is set as a value of no less than the capacity charging period of the double electric layer on the anode at points located at a minimum distance from the cathode, and no more than the capacity charging period of the double electric layer on the anode at points located at a distance from the cathode equal to the maximum acceptable inter-electrode gap size characterizing the acceptable margin of error in copying the electrode instrument size.

A disadvantage of the above method is lack of techniques for selecting pulse parameters providing a predetermined surface roughness.

An electrochemical dimensional machining method with an optimum pulse length is known from US 6723223 (B23H3/00, published on 20.04.2004). According to the method, the machining voltage pulses with predetermined optimum length are supplied to the machining gap, said optimal length determined based on the maximum value of the localization coefficient for the predetermined length of the machining gap.

The above technical solution is accepted the prior art for the present invention, as it is most similar to the present invention in terms of technical essence and obtained affect.

However, said method, as well as the previous method, does not allow for machining mode parameter optimization in order to achieve the predetermined surface roughness.

A low-voltage high-current power source for electrochemical metal machining apparatuses is known from a Russian Federation Patent 2025031 (H02M5/25, published on 15.12.1994), said power source comprising a controllable rectifier with a primary thyristor unit and a thyristor control system, a thyristor key with cathode thereof connected to the positive load lead and with anode thereof connected to the first reactor lead, a thyristor grounding switch, and a control system for controlling key and grounding switch thyristors, wherein anodes of the key and grounding switch thyristors are combined and connected to the first rectifier lead, and wherein the cathode of the grounding switch thyristor is connected to the second reactor lead, the second rectifier lead and the negative load lead.

Disadvantages of said prior art solution include limited functionality and insufficient reliability of the power source.

The prior art for the present invention, in terms of technical essence and obtained effect, is the power source disclosed in (EP 1714725 B23H3/02, 25.10.2006, Patent Application of the Russian Federation 2008145736, B23H3/02, 27.05.2010) and formed by current generators connected in parallel, in which each generator is connected to a load via a current switch, which shorts out the current generator when the current is not yet at the specified value or there needs to be a pause between the pulses, and switches the current to pick up and carry the load, in order to form a pulse of the specified length on the load, wherein the current switch is connected to the current generator output in such way that the normally closed contact is connected to a common point while the normally opened contact is connected to the load. The total internal inductance of the current source and the wire connecting the current generator to the current switch is significantly higher than the total inductance of the load and wires connecting the current switch to the load.

Disadvantages of said prior art solution include limited functionality and insufficient reliability of the power source due to the fact that capacitive type of load and characteristics of modern transistors are not taken into account during electrochemical machining. MOSFET transistors always comprise an integrated back-to-back diode, and after the end of current pulse, the load contains polarization voltage, which may lead to uncontrollable reverse current through the back-to-back diode of the second transistor and through the opened first transistor, which has an adverse effect on reliability of the power source. When machining using bursts of microsecond pulses, the ratio of the reverse current to the working current increases, thus inhibiting the machining process. In particular, when machining heat-tolerant and titanium alloys, electrode instrument dissolution may occur.

It is an object of the present invention to increase efficiency of the electrochemical machining of current-conducting materials and to provide a high-quality surface by optimizing the current pulse parameters and the use of a reliable power source with a common control system.

The object is achieved by an electrochemical machining method with electrode instrument vibration, the method comprising: supplying square microsecond current pulses synchronized with the moment of maximum convergence of an electrode instrument and an electrode blank, wherein, in contrast to prior art, the machining is carried out within the following parameter range: pulse length t = 10...500 µs, length of the leading and trailing pulse edges τ_{f}= 0,5...5,0 µs, voltage amplitude Uₐ =10-100 V, amplitude density of the current j = 100...10000 A/cm² with the amplitude and pulse length being adjusted in such a manner that the trailing edge of each pulse corresponds to the moment of a greatest electro-conductivity across an inter-electrode gap.

Furthermore, according to the invention, in order to determine the greatest electro-conductivity across the inter-electrode gap, the current pulse amplitude or length is increased until a sharp increase in voltage associated with a decrease in electro-conductivity across the inter-electrode gap occurs, and then the current pulse amplitude or length is decreased to a value, at which the voltage value at the end of every pulse is minimal.

Furthermore, according to the invention, in order to determine the greatest electro-conductivity across the inter-electrode gap, the voltage pulse amplitude or length is increased until a sharp current decrease associated with a decrease in electro-conductivity across the inter-electrode gap occurs, and then the voltage pulse amplitude or length is decreased to a value, at which the current value at the end of every pulse is maximal.

Furthermore, according to the invention, in order to obtain the predetermined roughness of the machined surface, the current pulse amplitude is increased during machining, and the pulse length is selected in such way that the trailing edge of every pulse corresponds to the moment of the greatest electro-conductivity across the inter-electrode gap, and wherein the amplitude is increased until the predetermined roughness of the machined surface is reached.

The object is further achieved by a power source formed by current generators connected in parallel, in which each generator is connected to a load via a current switch so as to short out the current generator when the current of the generator is not yet at the specified value or there needs to be a pause between the pulses and switching of the current to pick up and carry the load, in order to form a pulse of the specified length on the load, wherein the current switch thereof is connected to the current generator output in such way that the normally closed contact is connected to a common point, wherein the total internal inductance of the current source and the wire connecting the current generator to the current switch is significantly higher than the total inductance of the load and wires connecting the current switch to the load, and wherein, in contrast to prior art, the normally opened contact is connected to the current generator via a diode.

Furthermore, according to the invention, the normally closed contact and the normally opened contact are formed on transistors.

Furthermore, according to the invention, voltage limiters are formed in parallel to the transistors.

The essence of the invention and the aforementioned technical effect will be appreciated by reference to accompanying drawings, wherein
Fig. 1 shows a connection diagram of current generators, current switches, and a load, thus providing a power source;
Figs. 2, 3 show schemes of the voltage limiter in the power source;
Fig. 4 illustrates the correlation between surface roughness Ra and pulse length t at various amplitude densities of the current j;
Fig. 5 shows oscillograms of current density *J* at various voltages: U=10...35 V (5.5% NaCl electrolyte, inter-electrode gap s=30 µm, electrolyte pressure at the entrance to inter-electrode gap P=3 atm);
Fig. 6 shows equal roughness lines Ra(j,t)=const and a current pulse parameter selection chart: a is the correlation between maximum acceptable pulse length t and the amplitude density of the current, b is the predetermined density line,

M is the working point, and R is the minimum achievable roughness.

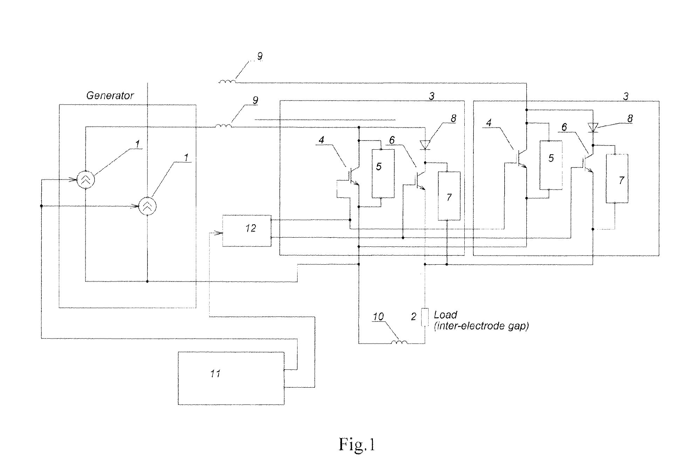

A power source (Fig. 1) is formed by current generators 1 connected in parallel (Fig. 1 illustrates connection of two current generators) and connected to a load 2 via current switches 3. A transistor 4 is used to form a normally closed contact protected from electric breakdown by a voltage limiter 5. A transistor 6 is used to form a normally opened contact protected from electric breakdown by a second voltage limiter 7 and connected to the current generator via a diode 8. The inductance of wires connecting the current generators to current switches 9 is significantly higher than the inductance of wires connecting the current switches to the load 2, 10. A control unit 11 controls the current generators and (by means of drivers 12) the current switches 3. The number of the current generators and keys is determined in accordance with required power of the power source and can be sufficiently high, since the disclosed connection circuit provides a uniform distribution of current between the keys, as well as safe operation of the transistors.

The voltage limiter is provided according to one of the conventional circuits and can be formed in various ways, depending on amplitude of the required pulse edge and the inductance of wires connecting the current switches 3 to the load 2.

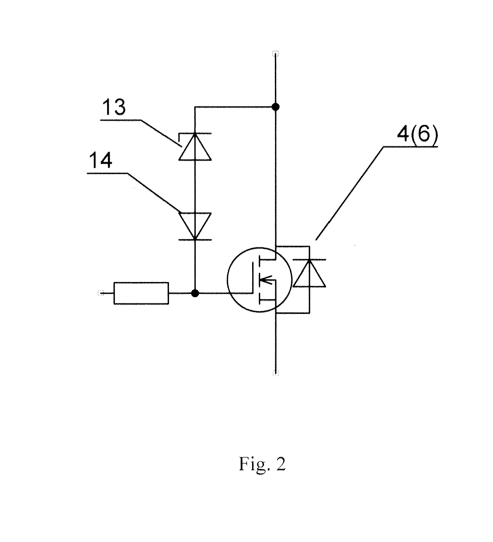

When the current switch 3 is located close to the load 2, and when there is no need to form pulses with edges shorter than 3...5 µs, the voltage limit can be set at about 60...80V, and MOSFET transistors can be used. In this case, the voltage limiter comprises a voltage regulator 13 and a diode 14 connected in series between the transistor drain and the transistor gate (Fig. 2).

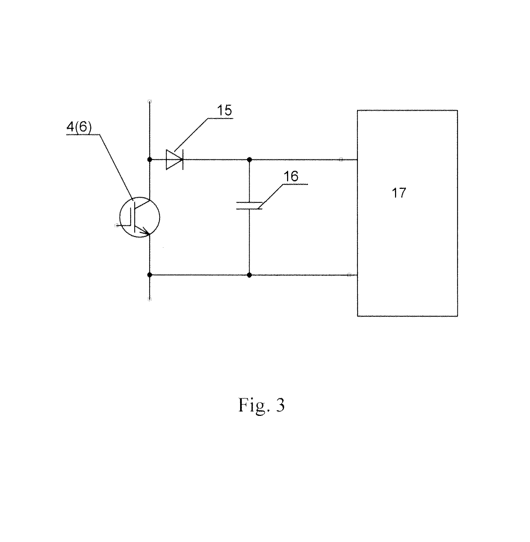

In another embodiment, the voltage limiter (Fig. 3) may comprise a capacitor 16 connected in parallel with the transistor via a diode 15 and a voltage stabilizer 17 also connected in parallel with the transistor. This circuit is used when there is a large distance between the current switch 3 and the load 2 (the inductance 10 has high values).

The power source is operated as follows. When the current generators 1 are switched on, the transistors 4 are on and the transistors 6 are off (Fig. 1). The current travels from the positive side of the current generator 1 to the negative side thereof, thus avoiding the resistive load 2. The above state is maintained until the current from the current generator 1 reaches a predetermined value. The time interval required therefor can be substantial, since the current generators 1 can have high inductance values, and such delay is accounted for in the control unit 11, which gives a command to switch the current generators on in advance as required.

When it is necessary to supply a pulse to the resistive load 2, the transistors 4 are switched off, and the transistors 6 are switched on. Therefore, the current from the current generators passes through the resistive load 2. As the switching speed of modern transistors is very high, and current in the load cannot be switched on with such speed due to inductance in the circuit, the transistors 4 and 6 experience voltage surge. The voltage limiters 5 and 7 are provided in the circuit to prevent failure of the transistors. Further-more, a similar voltage surge occurs at the output of the current switch 3, thus accelerating buildup of the current in the load 2.

When it is necessary to take off a pulse from the resistive load 2, the transistors 4 are switched on, and the transistors 6 are switched off. Therefore, the current from the current generator now bypasses the load 2. The inductance 10 in the load circuit creates a voltage surge across the transistors 6. A similar voltage surge having a minus sign occurs at the output of the current switch 3, which accelerates drop of the current in the load. The aforementioned switch operations can be repeated as many times as required without switching off the current generator in order to obtain a pulse group. After the final switching operation, the current generator can be switched off. Such configuration allows to use the disclosed power source in electrochemical machining with microsecond pulses or microsecond pulse bursts. Such circuit configuration allows to create a compact and producible structure. When a large number of transistors is used, said transistors are divided into two groups with interconnected emitters (sources) having a common control system and a common voltage limiter.

The voltage limiter in the circuit with a voltage regulator (Fig. 2) is operated as follows. When the voltage at the transistor drain exceeds a breakdown point of the voltage regulator, the voltage regulator is opened, and a voltage is supplied to the transistor gate, thus partially opening the transistor. Therefore, the transistor turn-off speed is set to such value that the voltage at the transistor gate does not exceed the acceptable value. The energy stored by the inductance 10 during the pulse is ultimately released as heat on the transistor, and, if the inductance 10 value is high (due to substantial wire length), said energy reduces the acceptable current value.

The voltage limiter in the circuit with a capacitor is operated as follows. The capacitor 16 is charged up until having the voltage at which it is necessary to limit voltage across the transistor. When the voltage across the transistor's collector with respect to voltage across the capacitor 16 exceeds 0.7V, the current starts to flow through the diode 15, thus charging capacitor 16. Capacity of the capacitor is selected sufficiently high, so that during the voltage peak, the change in voltage across the capacitor 16 is insignificant. During the pause between the pulses, the voltage stabilizer 17 discharges capacitor 16 until a predetermined value is reached. In the circuit of this embodiment, the voltage limiter can limit voltage at a very high level (up to maximum transistor voltage) without increasing load on the transistor. The energy thus stored by the inductance 10 during the pulse is ultimately released as heat in the voltage stabilizer 17 or recuperated. Such circuit can be used to create extremely short pulse edges, or it can be used with substantial values of the inductance 10 (when distances between the current switch 3 and the load 2 are large).

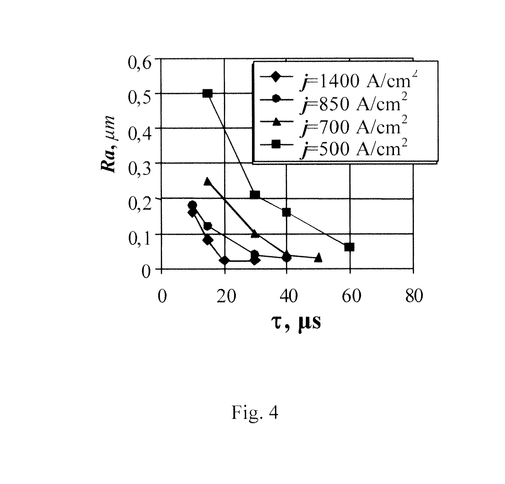

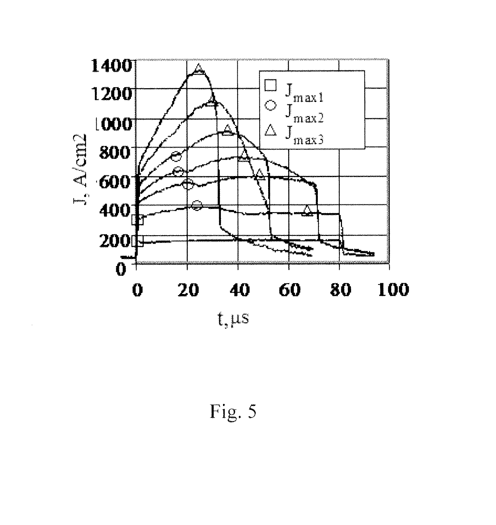

When most types of alloy-products are electrochemically machined, they usually experience a decrease in a surface roughness with the increase in current density, which is limited by the processes of expulsion of reaction products from the inter-electrode gap during electrochemical machining. The pulse electrochemical machining allows to reach higher current densities, and it has been found that the surface roughness also decreases with an increase in pulse length (Fig. 4). The increase in pulse length over *t*ₘₐₓ₃ is limited by phase termination, the start of which corresponds to the maximum value (*J*ₘₐₓ *= J*(*t*ₘₐₓ₃)) on the current oscillogram (Fig. 5), and after which an electrical breakdown across the inter-electrode gap is very probable. Therefore, machining modes with pulse length over *t*ₘₐₓ₃ are inoperative in such conditions.

On the other hand, selection of parameters for electrochemical machining is limited by characteristics of the equipment used. For example, increase in amplitude current is limited by maximum current of the generator. That is, a given current density defines a maximum machining area achievable for a particular machining apparatus. Further, the limitations pertain to minimum pulse length of the generator current. For a given minimum pulse length, a minimum achievable current is defined for a particular machined area.

Therefore, when selecting machining modes, the following factors must be taken into account:
1. Increase in amplitude current density and pulse length allows to reduce roughness of the machined surface.
2. Increase in amplitude current density and pulse length has power limitations.
3. In order to increase maximum machining area and to decrease consumption of power during the process, a decrease in amplitude current density is advantageous.

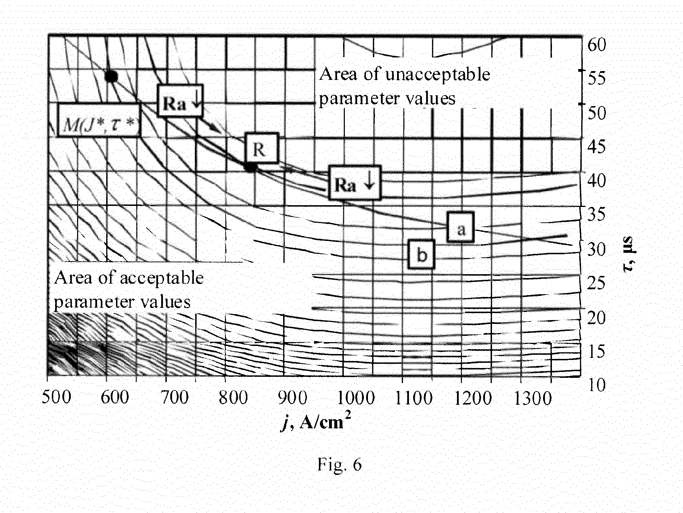

A projection of surface *Ra=f(j,t)* on surface (*j* - *t*) yields a set of curves of equal roughness (Fig. 6). For the selected set of machining mode parameters (see Table) in coordinates *j - t*, a curve *t*ₘₐₓ₃=*f(j)*, is determined, each point thereof corresponding to the minimum position on the voltage pulse oscillogram (curve *a* in Fig. 6). The area of unacceptable parameters, in which a breakdown of inter-electrode gap is possible, is located above said curve. The point R, in which said curve intersects a line of equal roughness, indicates the minimum achievable surface roughness. In the conditions set forth herein, said point corresponds to *Ra*~ 0,02 µm with *j*=850 A/cm² and τ=40 µs.

Curve b corresponds to a predetermined roughness, which must be higher than at point R. The first intersection of the curve defined by *b* and *a* yields point *M* with coordinates (*j**, *t**), at which the predetermined surface quality is achieved with minimum current density.

The method is carried out as follows.

First, the machining is carried out at low current density, wherein the pulse length is selected to be less than the time interval required to reach maximum current t₃ for voltage sources/generators. For voltage sources/generators, the pulse length is determined on the oscillogram by the minimum voltage at the end of the pulse. If maximum conductivity is not reached due to reaching maximum current of the power source, the current pulse length is increased until maximum conductivity across the inter-electrode gap is reached.

An exemplary embodiment of the method and the power source is provided hereinafter. The electrochemical machining using the disclosed power source was carried out on a chromium steel piece sized 40X13, with electrode working area of 0.3 to 2 cm², in a 8% NaNO₃ electrolyte, and with density of 1050 kg/cm³. Parameters of the machining mode are shown in Table.

**Table**

| | Parameter | Symbol | Measurement unit | Variation range |
|---|---|---|---|---|
| 1 | Voltage at the inter-electrode gap | U | V | 6...70 |
| 2 | Electrolyte pressure at the entrance to the inter-electrode gap | P | kPa | 500 |
| 3 | Current pulse length | t | µs | 10...2500 |
| 4 | Electrolyte temperature | T₀ | °C | 20 |
| 5 | Vibration amplitude | Δh | µm | 200 |
| 6 | Vibration frequency | f | Hz | 50 |
| 7 | Pulse amplitude | I | A | 200-2000 |
| 8 | Leading/trailing edge | τ_{f} | µs | 2 |

| | | | | |
|---|---|---|---|---|
| 1. Selected current density was j = 100 A/cm², pulse length *t* = 2500 µs corresponds to maximum length provided by the generator. The machining surface area was 2.35 cm². 2. At the final stage, the pulse length was decreased to 20 µs, and the current amplitude was gradually increased up to I = 2000 A (j=850 A/cm²) without permitting phase termination of the inter-electrode gap (not allowing a voltage increase after reaching a maximum conductivity across the inter-electric gap). 3. The pulse length was increased, wherein the pulse length was limited by phase termination and equaled *t* = 40 µs. The surface roughness thus obtained was 0.03 µm. | | | | |

Such increase in current density is possible when using the disclosed power source, in which, due to connection between the normally opened contact of the current switch with the current generator via a diode, the uncontrollable reverse current is eliminated.

Therefore, the disclosed invention allows to achieve a predetermined roughness at the final stage of the electrochemical machining process when using the reliable and producible power source.

## Claims

1. An electrochemical machining method with electrode instrument vibration comprising:
supplying square microsecond current pulses synchronized with the moment of maximum convergence of an electrode instrument and an electrode blank, the method **characterized in that** the machining is carried out within the following parameter range: pulse length t = 5...500 µs, length of the leading and trailing pulse edges τ_{f}= 0,5...5 µs, voltage amplitude Uₐ =10-100 V, amplitude density of the current j = 100...10000 A/cm², with the amplitude and pulse length being adjusted in such a manner that the trailing edge of each pulse corresponds to the moment of the greatest electro-conductivity across an inter-electrode gap.

2. The method according to claim 1, **characterized in that**, in order to determine the greatest electro-conductivity across the inter-electrode gap, the current pulse amplitude or length is increased until a sharp increase in voltage occurs, wherein the increase is associated with a decrease in electro-conductivity across the inter-electrode gap, and then the current pulse amplitude or length is decreased to a value, at which the voltage value at the end of every pulse is minimal.

3. The method according to claim 1, **characterized in that**, in order to determine the greatest electro-conductivity across the inter-electrode gap, the voltage pulse amplitude or length is increased until a sharp current decrease occurs, wherein the decrease is associated with a decrease in electro-conductivity across the inter-electrode gap, and then the voltage pulse amplitude or length is decreased to a value, at which the current value at the end of every pulse is maximal.

4. The method according to claim 1, **characterized in that**, in order to obtain a predetermined roughness of the machined surface, the current pulse amplitude is increased during machining, and the pulse length is selected in such way that the trailing edge of every pulse corresponds to the moment of the greatest electro-conductivity across the inter-electrode gap, and wherein the amplitude is increased until the predetermined roughness of the machined surface is reached.

5. A power source formed by current generators connected in parallel, wherein each of the generators is connected to a load via a current switch so as to short out the current generator when the current of the generator is not yet at the specified value or when there needs to be a pause between the pulses and switching of the current to pick up and carry the load, in order to form a pulse of the specified length on the load, wherein the current switch comprises a switching contact connected to the current generator output in such way that the normally closed contact is connected to a common point, wherein the total internal inductance of the current source and the wire connecting the current generator to the current switch is significantly higher than the total inductance of the load and wires connecting the current switch to the load, **characterized in that** the normally opened contact of the current switch is connected to the current generator via a diode.

6. The power source according to claim 5, **characterized in that** the normally closed contact and the normally opened contact of the current switch are transistorized using transistors.

7. The power source according to claim 6, **characterized in that** voltage limiters are arranged in parallel to the transistors.
